# EUROPEAN PATENT APPLICATION

(11) **EP 2 034 599 A2**
(43) Date of publication of application: **11.03.2009**
(21) Application number: 08015706.8
(22) Date of filing: 05.09.2008
(51) Int. Cl.: H02M 5/293

(54) **Load driving apparatus**

(30) Priority: 07.09.2007 JP 2007233066
(71) Applicant: MINEBEA Co., Ltd., Kitasaku-gun, Nagano-ken (JP)
(72) Inventor: Masuda, Shigemi, Kitasaku-gun Nagano-Ken (JP)
(74) Representative: Müller-Boré & Partner Patentanwälte

(57) **Abstract**

A load driving apparatus includes a transformer, a transformer driving circuit for supplying an alternate current signal to a primary side of the transformer, a load connected at a secondary side of the transformer, a dummy load connected at the secondary side of the transformer, a first switching device for switching whether to supply a secondary side signal of the transformer to the load, a second switching device for switching whether to supply the secondary side signal to the dummy load, and a switching control portion for controlling the first and second switching devices such that the supply of the secondary side signal to the dummy load is stopped when the secondary side signal is supplied to the load, and that the supply of the secondary side signal to the load is stopped when the secondary side signal is supplied to the dummy load.

## Description

### BACKGROUND OF THE INVENTION

### Field of the Invention

The present invention relates to a load driving apparatus to drive a load connected at a secondary side of a transformer.

### Background Art

Burst control is conventionally a drive control method for a load driving apparatus such as a switching power supply, a discharge lamp lighting apparatus and the like. The burst control is performed mainly for reducing standby power consumption in the switching power supply, or for dimming light in the discharge lamp lighting apparatus. For example, in the discharge lamp lighting apparatus, a burst dimming method controls time average brightness such that a drive voltage is intermittently applied to a discharge lamp thereby providing a light-on period and a light-off period for the discharge lamp, and the ratio between the turn-on and turn-off times in the intermittent operation of a high frequency current flowing through the discharge lamp, that is, the ratio between the light-on and light-off periods of the discharge lamp is varied.

In the burst control described above, it is known that because the drive frequency of the intermittent operation (hereinafter referred to as "burst frequency" as appropriate) is an audio frequency ranging from several 100 Hz to several kHz, burst frequency noise occurs due to magnetostriction generated in the core of a transformer or coil used in the switching power supply or the discharge lamp lighting apparatus. The magnetostriction is a physical distortion of a magnetic material caused by a rapid change of an internal magnetic flux of the transformer or the coil.

There are conventionally two basic measures to cope with the noises in the burst control method: one is a passive measure to attenuate or shield noises generated; and the other is an active measure to suppress noise generation itself. Among the passive measures are a method to shield the transformer or the coil with a sound insulation material or a sound absorption material, a method to remove a noise transmission medium by vacuum tight sealing, and like methods. Among the active measures for suppressing or reducing noise generation itself by devising an electronic circuit are a method to reduce fluctuation range of the amplitude of an input voltage applied to an inverter during the burst control (refer to, for example, Patent document 1: Japanese Patent Application Laid-Open Pub. No. H6-68980 (Claim 1)), a method to increase a rising/falling time by inclining an input voltage waveform (refer to, for example, Patent document 2: Japanese Patent Application Laid-Open Pub. No. 2000-58289), and like methods.

In the case of the discharge lamp lighting apparatus, it has been found by auditory sense and also from the measurement of noise level that noise can be reduced by moderating the change of lamp current at the time of burst dimming, and an active measure can be implemented by exploiting the characteristic of the finding.

The discharge lamp lighting apparatus described in Patent document 1 is an example to use the aforementioned method to reduce fluctuation range of the amplitude of an input voltage applied to the transformer or the coil, and includes: a discharge lamp, a high frequency power supply to supply a high frequency power to the discharge lamp; a dimming means to adjust the power supplied from the high frequency power supply to the discharge lamp thereby lighting the discharge lamp with dimmer control; a direct current voltage superimposing means to superimpose a direct current voltage to the high frequency power supply when the discharge lamp with a low luminous flux is dimmer-controlled; and a second power supply to intermittently apply a direct current high voltage to the discharge lamp when the temperature is low, wherein when the discharge lamp is dimmer-controlled by the dimming means at a low temperature, a direct current voltage is superimposed on the discharge lamp by the direct current superimposing means while an intermittent direct current voltage is applied to the discharge lamp by the second power supply, so that a load line and a lamp characteristic curve overlap with each other at one place.

The discharge lamp lighting apparatus described in Patent document 2 is an example to use the aforementioned method to incline the waveform of an input voltage applied to the inverter at the time of burst dimmer control, and includes an inverter circuit to generate an alternate current voltage from a direct current voltage wherein the voltage outputted from the inverter circuit is applied to a discharge lamp thereby lighting the discharge lamp. The discharge lamp lighting apparatus further includes: a tube current detecting means to detect a tube current flowing through the discharge lamp and to convert the current into a voltage; a current controlling means to control the conducting direction and the value of a current flowing through a primary winding of the inverter circuit based on a control voltage; a burst signal generating means to generate and output a burst signal voltage having a voltage level equal to or less than a predetermined threshold voltage level and having its voltage level varying at a predetermined inclination with a period of a frequency lower than the frequency of the alternate current voltage outputted from the inverter circuit; a feedback voltage generating means to add up the burst signal voltage outputted and the output voltage from the tube current detecting means based on the logical addition of diodes thereby generating and outputting a feedback voltage corresponding to a composite voltage of the burst signal voltage and the output voltage from the tube current detecting means; a control voltage generating means to supply to the current controlling means a control voltage corresponding to the feedback voltage; and a direct current level adjusting means connected to the control voltage generating means and adapted to vary a direct current level of the control voltage.

In the discharge lamp lighting apparatus disclosed in Patent document 1, since a direct current voltage is superimposed to the discharge lamp, the life of the discharge lamp is shortened.

On the other hand, the discharge lamp lighting apparatus disclosed in Patent document 2 incorporates a triangular wave generating circuit to convert a rectangular wave voltage of a dimming pulse signal into a triangular wave. However, the triangular wave generating circuit is limited in its capability to slow rising time and falling time of the triangular wave, thus failing. Therefore, it is difficult to obtain a sufficiently effective noise reduction.

The present invention has been made in light of the above problems and has as its object to provide a load driving apparatus which, while incorporating a simple and inexpensive circuitry, is highly effective in reducing noise.

### SUMMARY OF THE INVENTION

According to an aspect of the present invention, there is provided a load driving apparatus which is characterized by including: a transformer; a transformer driving circuit for supplying an alternate current signal to a primary side of the transformer; a load connected at a secondary side of the transformer; a dummy load connected at the secondary side of the transformer; a first switching device for switching whether to supply a secondary side signal of the transformer to the load; a second switching device for switching whether to supply the secondary side signal to the dummy load; and a switching control portion for controlling the first and second switching devices such that the supply of the secondary side signal to the dummy load is stopped when the secondary side signal is supplied to the load, and that the supply of the secondary side signal to the load is stopped when the secondary side signal is supplied to the dummy load.

According to the present invention, a load driving apparatus is provided which, while incorporating a simple and inexpensive circuitry, is highly effective in reducing noise.

### BRIEF DESCRIPTION OF THE DRAWINGS

Fig. 1 is a block diagram showing an outline configuration of a load driving apparatus according to a first embodiment of the present invention;
Fig. 2 is a block diagram showing a concrete configuration of a switching power supply as a specific example of Fig. 1;
Figs. 3(a) to 3(e) are charts showing an example of operation timing of the switching power supply of Fig. 2 during burst driving;
Fig. 4 a block diagram showing a concrete configuration of a discharge lamp lighting apparatus according a second embodiment of the present invention;
Fig. 5 is a block diagram showing a concrete configuration of a discharge lamp lighting apparatus according to a third embodiment of the present invention;
Figs. 6(a) to 6(f) are charts showing an example of operating time of the switching power supply of Fig. 5 during burst driving;
Fig. 7 is a block diagram showing a concrete configuration of a discharge lamp lighting apparatus according to a fourth embodiment of the present invention;
Figs. 8(a) to 8(h) are charts showing a example of operation timing of the discharge lamp lighting apparatus of Fig. 7 during burst driving;
Fig. 9 is a block diagram showing an outline configuration of a load driving apparatus according to a fifth embodiment of the present invention;
Fig. 10 is a block diagram showing a concrete configuration of a switching power supply as a specific example of Fig. 9;
Fig. 11 is a block diagram showing a concrete configuration of a discharge lamp lighting apparatus according to a sixth embodiment of the present invention; and
Fig. 12 is a block diagram showing a concrete configuration of a discharge lamp lighting apparatus according to a seventh embodiment of the present invention.

### DETAILED DESCRIPTION OF THE INVENTION

Embodiments of the present invention will hereinafter be described with reference to the accompanying drawings.

### (First embodiment)

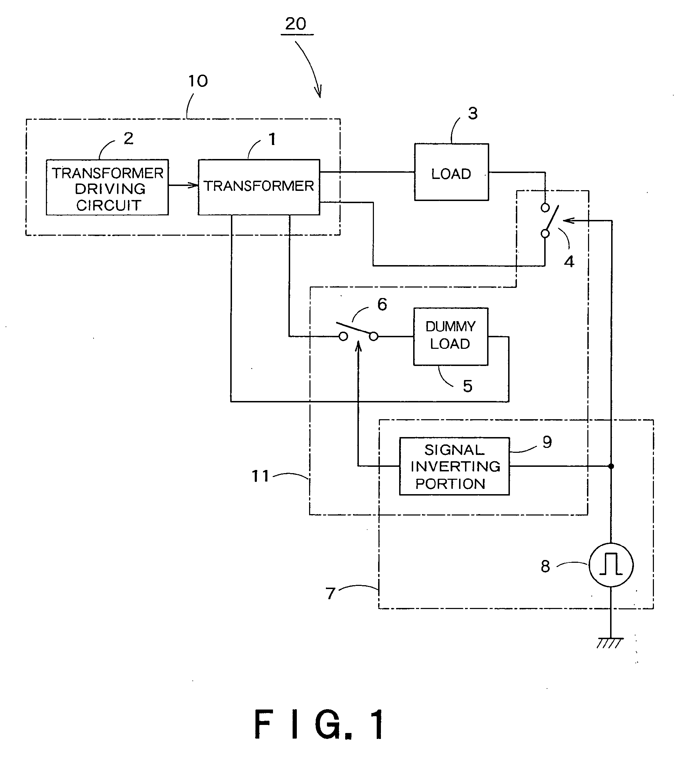

Fig. 1 is a block diagram showing an outline structure of a load driving apparatus 20 according to a first embodiment of the present invention. The load driving apparatus 20 of Fig. 1 includes a transformer 1, a transformer driving circuit 2 to supply an alternate current signal to the primary side of the transformer 1, a load 3 connected at the secondary side of the transformer 1, a first switching device 4 to turn on and off supply of a secondary side signal of the transformer 10 to the load 3, a dummy load 5, a second witching device 6 to turn on and off supply of the secondary side signal to the dummy load 5, and a switching control portion 7 to control the first and second switching devices 4 and 6.

The switching control portion 7 includes a burst signal generating portion 8 to generate a burst signal, and a signal inverting portion 9 to invert the burst signal.

The transformer 1 and the transformer driving circuit 2 correspond to an inverter circuit 10, and the dummy load 5, the first and second switching devices 4 and 6, and the signal inverting circuit 9 correspond to a noise reducing circuit 11.

The switching control portion 7 is adapted to control the first and second switching devices 4 and 6 so that the supply of the secondary side signal to the dummy load 5 is stopped when the secondary side signal is supplied to the load 3, and also that the supply of the secondary signal to the load 3 is stopped when the secondary side signal is supplied to the dummy 5.

Thus, the switching control portion 7 can performs alternately driving control of either the load 3 or the dummy load 5, and such driving control is performed when the load 3 is burst-driven. When the load 3 is steady-driven, the switching control portion 7 controls the first and second switching devices 4 and 6 so that the secondary side signal is constantly supplied only to the load 3 while the secondary side signal is not supplied to the dummy load 5. In this way, during the steady driving, the load driving apparatus 20 is adapted to perform the same operation as that of the load driving apparatus without the function of the noise reducing circuit 11.

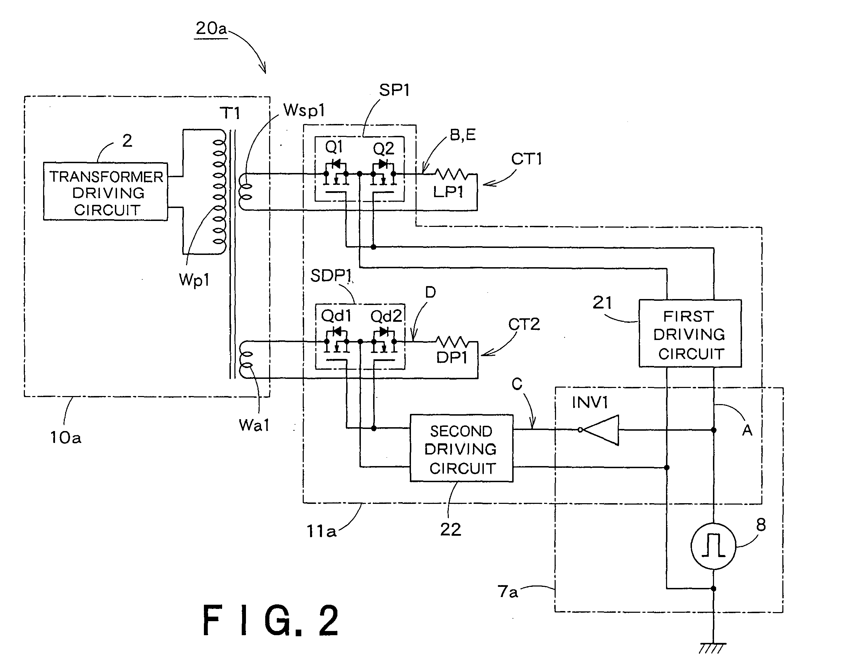

Fig. 2 is a block diagram showing a concrete configuration of a switching power supply 20a as a specific example of Fig. 1. In Fig. 2, any component parts corresponding to those in Fig. 1 are denoted by the same reference numerals, and the following explanation will be focused on the difference from Fig. 1.

The switching power supply 20a of Fig. 2 includes a secondary winding Wsp1 and an auxiliary winding Wa1 which are disposed at the secondary side of a transformer T1 and which are both magnetically coupled to a primary winding Wp1 of the transformer T1. A first switch SP1 and a load LP1 are connected to the secondary winding Wsp1 in series, and a first closed circuit CT1 is made up of the secondary winding Wsp1, the first switch SP1 and the load LP1. A a second switch SDP1 and a dummy load DP1 are connected to the auxiliary winding Wa1 in series, and a second closed circuit CT2 is made up of the auxiliary winding Wa1, the second switch SDP1 and the dummy load DP1.

The load LP1 is an electronic device or an electronic component driven by an inverter circuit 10a. The first switch SP1 is composed of two n-MOSFETs Q1 and Q2 connected in cascade to each other. The n-MOSFETs Q1 and Q2 are turned on and off by a first driving circuit 21. In the same way, the second switch SDP1 is composed of two n-MOSFETs Qd1 and Qd2 connected in cascade to each other, and the n-MOSFETs Qd1 and Qd2 are turned on and off by a second driving circuit 22.

The first driving circuit 21 supplies a gate voltage to each of the n-MOSFETs Q1 and Q2 on the basis of the intermediate node potential of the two n-MOSFETs Q1 and Q2. When the gate voltage exceeds a predetermined threshold voltage, the both n-MOSFETs Q1 and Q2 are turned on at substantially the same timing, and when the gate voltage goes down below the threshold voltage, the both n-MOSFETs Q1 and Q2 are turned off at substantially the same timing.

While the two n-MOSFETs Q1 and Q2 are kept turned on, a current flows through the load LP1 in a direction according to the polarity of an induced electromotive force generated between the both ends of the secondary winding Wsp1. Since the transformer driving circuit 2 supplies an alternate current signal to the primary winding Wp1, an electromotive force generated between the both ends of the secondary winding Wsp1 is also an alternate current, and therefore the direction of the current flowing through the load LP1 changes periodically.

In the same way, the first driving circuit 22 supplies a gate voltage to each of the n-MOSFETs Qd1 and Qd2. on the basis of the connection node potential of the two n-MOSFETs Qd1 and Qd2. When the gate voltage exceeds a predetermined threshold voltage, the both n-MOSFETs Qd1 and Qd2 are turned on at substantially the same timing, and when the gate voltage goes down below the threshold voltage, the both n-MOSFETs Qd1 and Qd2 are turned off at substantially the same timing.

The first and second driving circuits 21 and 22 control ON/OFF of the first and second switches SP1 and SDFP1 in synchronization with the burst signal generated by the burst signal generating portion 8. A signal inverting circuit INV1 is disposed between the second driving circuit 22 and the burst signal generating portion 8, inverts the polarity of the burst signal generated by the burst signal generating portion 8 and supplies the inverted signal to the second driving circuit 22. Thus, the second switch SDP1 is turned off while the first switch SP1 is turned on, and the first switch SP1 is turned off while the second switch SDP1 is turned on.

The switching power supply 20a of Fig. 2 is intended to burst-drive the load LP1. But, when the load LP1 is to be steady-driven, a fixed level signal is outputted constantly from the burst signal generating portion 8, whereby a high level signal is outputted constantly from the first driving circuit 21, and a low level signal is outputted constantly from the second driving circuit 22, which results in that the first switch SP1 is always turned on while the second switch SDP1 is always turned off.

In Fig. 2, the dummy load DP1, the first and second switches SP1 and SDP1, the first and second driving circuits 21 and 22 and the signal inverting circuit INV1 correspond to a noise reducing circuit 11a. The burst signal generating portion 8 and the signal inverting signal INV1 correspond to a switching control portion 7a.

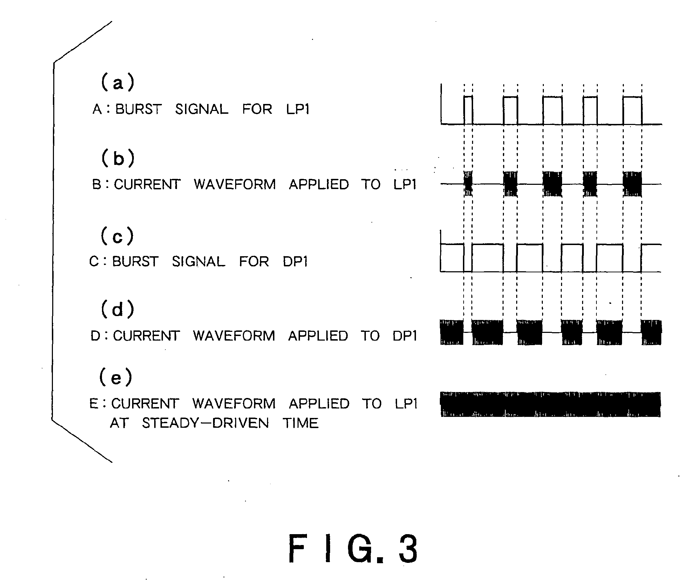

Figs. 3(a) to 3(e) are charts showing an example of operation timing of the switching power supply 20a of Fig. 2 during the burst driving. Figs. 3(a) to 3(e) show signal waveforms of nodes A to E indicated in Fig. 2. The operation of the switching power supply 20a of Fig. 2 will be described with reference to Figs 3(a) to 3(e).

The burst signal generating portion 8 outputs a pulse-shaped burst signal as shown in Fig. 3(a). In the following description, each pulse in Fig. 3(a) is referred to as burst signal. The first driving circuit 21 turns on the first switch SP1, only while a high level burst signal is inputted. When the first switch SP1 is turned on, a current corresponding to the induced electromotive force generated between the both ends of the secondary winding Wsp1 of the transformer T1 flows through the load LP1 thereby driving the load LP1. Since the direction of the induced electromotive force generated at the secondary winding Wsp1 is periodically switched, the direction of the current flowing through the load LP1 also changes periodically as shown Fig. 3(b).

Meanwhile, the signal outputted from the burst signal generating portion 8 and inverted at the signal inverting circuit INV1 as shown in Fig. 3(c) is supplied to the second driving circuit 22. Consequently, the second driving circuit 22 outputs a high level burst signal thereby turning on the second switch SDP1, only while the burst signal generating portion 8 outputs a low level burst signal. When the second switch SDP1 is turned on, a current corresponding to the induced electromotive force generated between the both ends of the auxiliary winding Wa1 of the transformer T1 flows through the dummy load Dp1 thereby driving the DP1. Since the direction of the induced electromotive force generated at the auxiliary winding Wa1 is periodically switched, the direction of the current flowing through the dummy load DP1 also changes periodically as shown in Fig. 3(d).

On the other hand, when the switching power supply 20a of Fig. 2 is steady-driven, the burst signal generating portion 8 constantly outputs a high level signal, and the first driving circuit 22 always turns on the first switch SP1. Consequently, an alternate current as shown in Fig. 3(e) flows through the load LP1, and the load LP1 is driven continuously.

The switching power supply 20a of Fig. 2, while not driving the load LP1 during the burst driving, constantly drives the dummy load DP1, and the internal magnetic flux of the transformer T1 changes at a high frequency continuously even during the burst driving. Thus, since the internal magnetic flux of the transformer T1 changes during the burst driving in the same way as during the steady driving, a change of the internal magnetic flux at a low frequency, which causes magnetostriction, does not occur, and therefore noise peculiar to the burst driving can be suppressed.

Thus, in the first embodiment, the dummy load DP1 is disposed at the secondary side of the transformer T1 and unfailingly driven while the load LP1 is not driven during the burst driving. Therefore, the internal magnetic flux of the transformer T1 is adapted to change at a high frequency in the same way as during the steady driving, and therefore the magnetostriction due to the internal magnetic flux changing at a low frequency is not caused, whereby noises due to the magnetostriction can be suppressed.

Also, in the first embodiment, since the dummy load DP1 is never driven when the load LP is steady-driven, the power is not wasted for the dummy load DP1, and the switching power supply 20a can achieve the same performance as a switching power supply without the noise reducing circuit 11a.

### (Second embodiment)

In a second embodiment described below, the present invention is applied to a discharge lamp lighting apparatus.

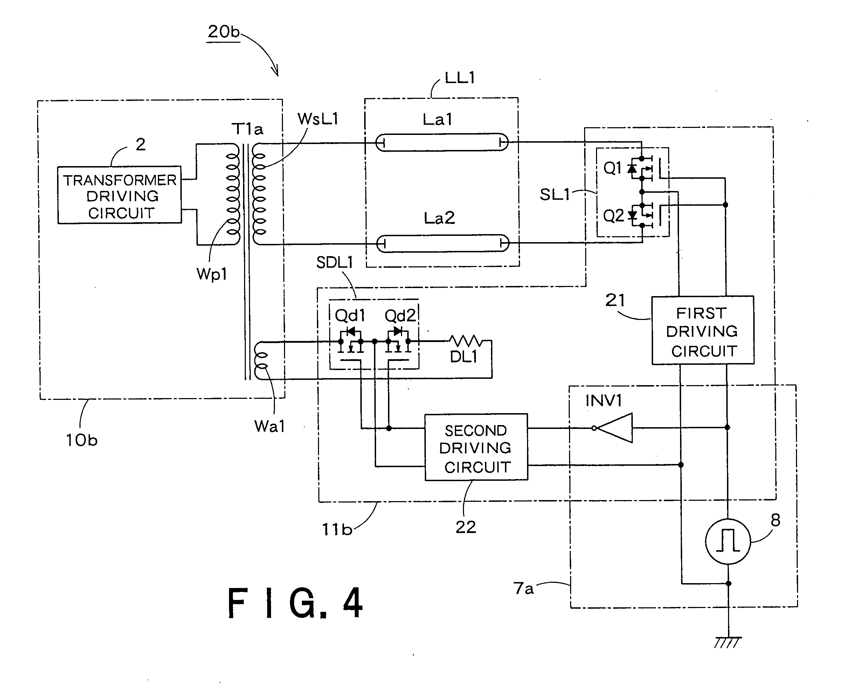

Fig. 4 is a block diagram showing a concrete configuration of a discharge lamp lighting apparatus 20b according to the second embodiment of the present invention. In Fig. 4, any component parts corresponding to those in Fig. 2 are denoted by the same reference numerals, and the following explanation will be focused on the difference from Fig. 2.

The discharge lamp lighting apparatus 20b of Fig. 4 has the same configuration as that of the first embodiment of Fig. 2 except the internal configuration of a load LL1 and the connection point of a first switch SL1. The load LL1 includes a first discharge lamp La1 connected between one end of a secondary winding WsL1 and one terminal of the first switch SL1, and a second discharge lamp La2 connected between the other end of the secondary winding WsL1 and the other terminal of the first switch SL1. The secondary winding WsL1, the first discharge lamp La1, the first switch SL1 and the second discharge lamp La2 correspond to a first closed circuit.

The operation of the discharge lamp lighting apparatus 20b of Fig. 4 will be described hereinafter. When a burst signal generating portion 8 outputs a high level burst signal, a first driving circuit 21 outputs a high level burst signal thereby turning on the first switch SL1. As a result, an alternate current flows through the aforementioned first closed circuit, and the first and second discharge lamps La1 and La2 are both lit.

When the burst signal generating portion 8 outputs a high level burst signal, a second driving circuit 22 turns off a second switch SDL1, and a current does not flow through a dummy load DL1.

While the burst signal generating portion 8 outputs a low level burst signal and the first switch SL1 is turned off, the second driving circuit 22 outputs a high level burst signal thereby turning on the second switch SDL1. As a result, a current flows through a second closed circuit including an auxiliary winding Wa1, the second switch SDL1 and the dummy load DL1, and the dummy load DL1 is driven.

Thus, in the second embodiment, one of the load LL1 and the dummy load DL1 is unfailingly driven in the same way as in the first embodiment, and therefore the internal magnetic flux of a transformer T1 changes constantly at a high frequency, thereby suppressing noises due to the magnetostriction.

Also, in the second embodiment, since the first and second discharge lamps La1 and La2 are connected to the respective ends of one secondary winding WsL1, the circuitry can be simplified compared with when two discharge lamps are driven separately by two different secondary windings (WsL1) and two first switches (SL1), and the component cost can be reduced and the apparatus can be downsized

There may be provided a variation example of Fig. 4 in which the first and second discharge lamps La1 and La2 are connected in series to each other, and the first switch SL1 is connected between one end side of the series connection and the secondary winding WsL1, rather than connected to the middle point side between the first and second discharge lamps La1 and La2. The first switch SL1 is preferably connected to the middle point of the series connection of the first and second discharge lamps La1 and La2, instead of being connected at one end side of the series connection, because the middle point is a virtual ground and has a lower potential than one end side. Therefore, it is possible to lower the withstand voltage of first switch SL1, thereby using an inexpensive switch with a low withstand voltage as the first switch SL1.

### (Third embodiment)

A third embodiment described below includes a plurality (specifically two) of secondary windings and a plurality of loads.

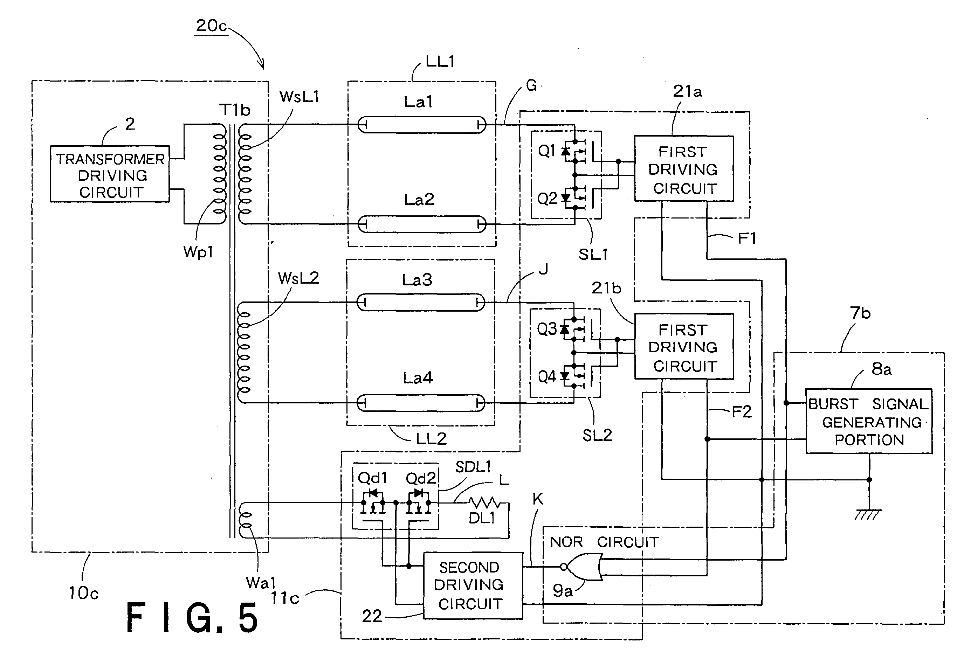

Fig. 5 is a block diagram showing a concrete configuration of a discharge lamp lighting apparatus 20c according to a third embodiment of the present invention. In Fig. 5, any component parts corresponding to those in Fig. 4 are denoted by the same reference numerals, and the following explanation will be focused on the difference from Fig. 4.

The discharge lamp lighting apparatus 20c of Fig. 5 includes two secondary windings WsL1 and WsL2 at the secondary side of a transformer T1. A load LL1, a first switch SL1 and a first driving circuit 21a are connected to the secondary winding WsL1, while a load LL2, a first switch SL2 and a first driving circuit 21b are connected to the secondary winding WsL2.

A burst signal generating portion 8 supplies respective burst signals of different timings to the first driving circuits 21a and 21b.

A signal inverting circuit 9a performs a NOR operation of the two burst signals outputted from the burst signal generating portion 8. A signal outputted from the signal inverting circuit 9a is supplied to a second driving circuit 22.

The load LL1 connected to the secondary winding WsL1 includes first and second discharge lamps La1 and La2 connected to the respective ends of the secondary winding WsL1, and the load LL2 connected to the WsL2 includes first and second discharge lamps La3 and La4 connected to the respective terminals of the secondary winding WsL2, in the same way as in the second embodiment of Fig. 4.

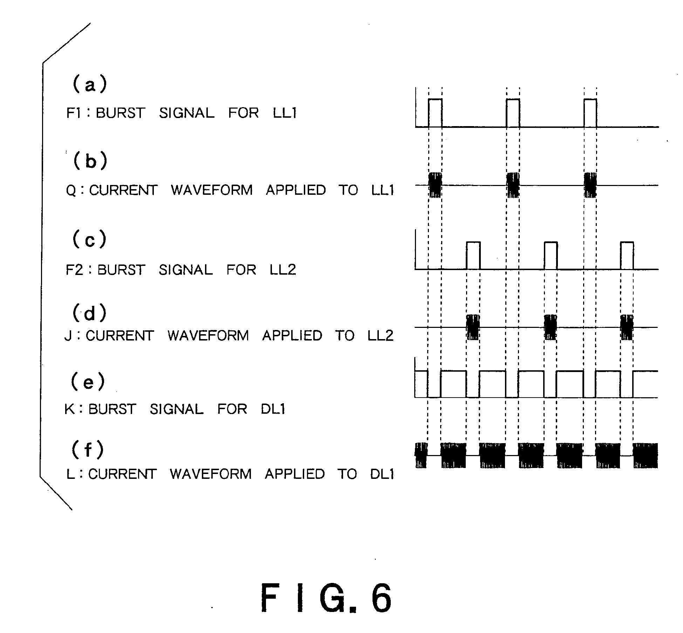

Figs. 6(a) to 6(f) are charts showing an example of operation timing of the discharge lamp lighting apparatus 20c of Fig. 5 during the burst driving. Figs. 6(a) to 6(f) show signal waveforms of nodes F to L indicated in Fig. 5. When the burst signal generating portion 8a outputs a burst signal for the first driving circuit 21a as shown in Fig. 6(a), the first driving circuit 21a corresponding to the outputted burst signal turns on the first switch SL1. As a result, an alternate current flows through the first and second discharge lamps La1 and La2 as shown in Fig. 6(b), and the first and second discharge lamps La1 and La2 are lit. While the first driving circuit 21a outputs a high level burst signal, a current does not flow through the other first and second discharge lamps La3 and La4 and a dummy load DL1.

Then, when the burst signal generating portion 8a outputs a burst signal for the first drive 21b at a timing different from the timing of Fig. 6(a), the first driving circuit 21b corresponding to the burst signal outputs a high level burst signal as shown in Fig. 6(c) thereby turning on the first switch SL2. As a result, an alternate current flows through the first and second discharge lamps La3 and La4 as shown in Fig. 6(d), and the first and the second discharge lamps La3 and La4 are lit. While the first driving circuit 21b outputs a high level burst signal, a current does not flow through the other first and second discharge lamps La1 and La2 and the dummy load DL1.

When the burst signal generating portion 8a does not output any burst signal, the signal inverting circuit 9a outputs a high level signal as shown in Fig. 6(e), during which the dummy load DL1 is driven.

On the other hand, when the discharge lamp lighting apparatus 20c of fig. 5 performs steady driving, the burst signal generating portion 8a may output a high level signal to both the first drives circuits 21a and 21b, or may drive the first driving circuits 221a and 21b at respective different timings. In the former case, the first and second discharge lamps La1 and La2 are always turned on. Therefore, the brightness can be higher than in the embodiment of Fig. 4. If the number of discharge lamps to be driven concurrently can be controlled, the dimming control for adjusting brightness becomes possible. In any case, a current does not flow through the dummy load DL1 when stead driving is performed.

Thus, in the third embodiment, the two secondary windings WsL1 and WsL2 are provided which are arranged independently of each other such that the secondary winding WsL1 is combined with the first and second discharge lamps La1 and La2, the first switch SL1 and the first driving circuit 21a while the secondary winding WsL2 is combined with the first and second discharge lamps La3 and La4, the first switch SL2 and the first driving circuit 21b. Consequently, at the time of burst driving, the secondary winding WsL1 and the secondary winding WsL2 are operated dependently of each other, whereby the first and second discharge lamps La1 and La2 can perform lighting control at a different timing from the first and second discharge lamps La3 and La4. Since the dummy load DL1 is driven only when no discharge lamps are lit, the time of driving the dummy load DL1 can be reduced compared to the embodiment of Fig. 4 thus reducing power consumption for the dummy load DL1.

### (Fourth embodiment)

In a fourth embodiment described below, the number of loads each composed of first and second discharge lamps is increased compared to the third embodiment.

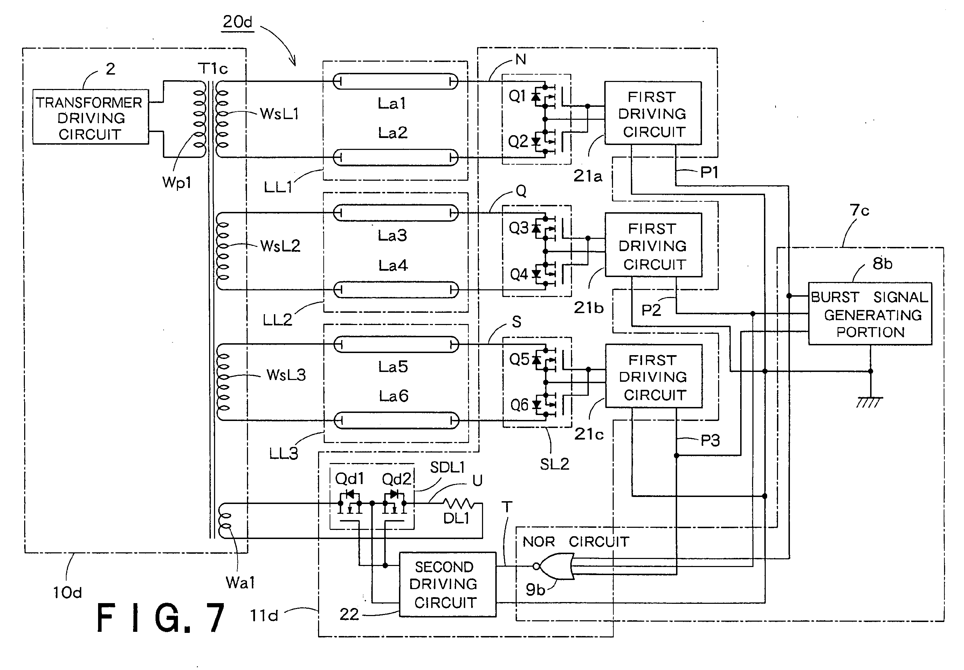

Fig. 7 is a block diagram showing a concrete configuration of a discharge lamp lighting apparatus 20d according to the fourth embodiment of the present invention. In Fig. 7, any component parts corresponding to those in Fig. 5 are denoted by the same reference numerals, and the following explanation will be focused on the difference from Fig. 5.

The discharge lamp lighting apparatus 20d of Fig. 7 includes three secondary windings WsL1, WsL2 and WsL3, which are arranged independently of one another such that first and second discharge lamps La1 and La2, a first switch SL1 and a first driving circuit 21a are connected to the secondary winding WsL1, first and second discharge lamps La3 and La4, a first switch SL2 and a first drive circuit 21b are connected to the secondary winding WsL2, and that first and second discharge lamps La5 and La6, a first switch SL3 and a first driving circuit 21c are connected to the secondary winding WsL2.

A burst signal generating portion 8b outputs respective burst signals for the first driving circuits 21a, 21b and 21 at different timings at the time of burst driving. A signal inverting circuit 9b performs an exclusive OR operation of the three burst signals outputted from the burst signal generating portion 8b. Consequently, when the burst signal generating portion 8b does not output a high level burst signal to any of the first driving circuits 21a, 21b and 21c, the signal inverting circuit 9b outputs a high level signal thereby driving a dummy load DL1.

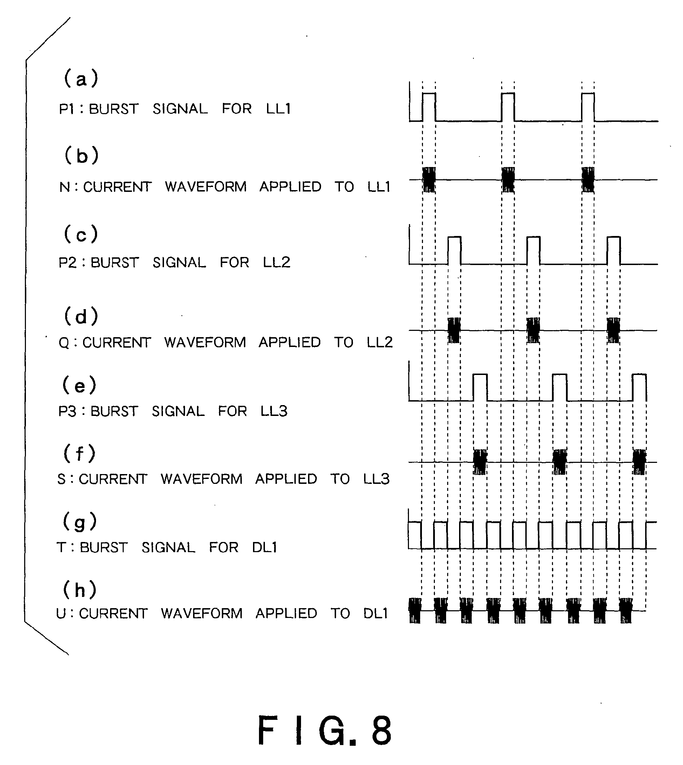

Figs. 8(a) to 8(h) are charts showing an example of operation timing of the discharge lamp lighting apparatus 20d of Fig. 7 during the burst driving. Fig. 8(a) to 8(h) show signal waveforms of nodes N to U indicated in Fig. 7. The burst signal generating portion 8b outputs three kinds of burst signals at respective different timings as shown Figs. 8(a), 8(c) and 8(e). When the burst signal generating portion 8b outputs any one of the burst signals, any one of the first driving circuits 21a, 21b and 21c corresponding to the outputted burst signal causes an alternate current to flow through the corresponding first and second discharge lamps of the first and second discharge lamps La1 and La2, La3 and La4, and La5 and La6 as shown in Figs. 8(b), 8(d) and 8(f) thereby lighting the first and second discharge lamps La1 and La2, La3 and La4, or La5 and La6.

On the other hand, while the burst signal generating portion 8b does not output a high level burst signal to any one of the first driving circuits 21a, 21b and 21c, the signal inverting circuit 9b outputs a high level signal as shown in Fig. 8(g), and the dummy load DL1 is driven as shown in Fig. 8 (h).

When the discharge lamp lighting apparatus 20d of Fig. 7 performs steady driving, the first and second discharge lamps La1 and La2, La3 and La4, and La5 and La6 may, in the same was as in the third embodiment, be concurrently lit, may be alternately driven, or may be driven by controlling the number of driven discharge lamps thereby performing a dimming control.

Thus, in the fourth embodiment, the numbers of secondary windings, first and second discharge lamps, first switches, and first driving circuits are increased compared to the third embodiment, and the increased first and second discharge lamps are driven alternately during the burst driving. As a result, the time of driving the dummy DL1 can be reduced thereby reducing the power consumption for the dummy DL1.

### (Fifth embodiment)

In a fifth embodiment described below, a dummy load is connected to the secondary side of a transformer in a different manner from the first and second embodiments.

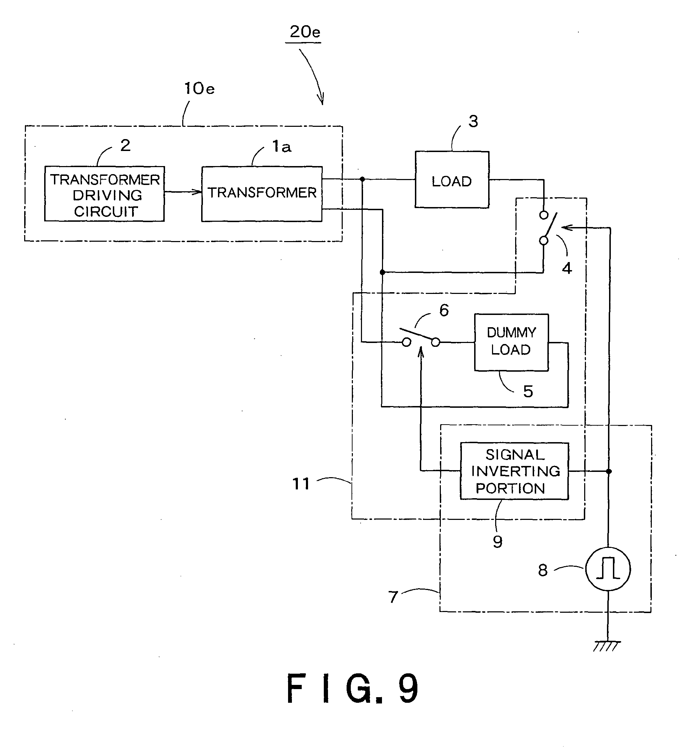

Fig. 9 is a block diagram showing an outline configuration of a load driving apparatus 20e according to the fifth embodiment of the present invention. In Fig. 9, any component parts corresponding to those in Fig. 1 are denoted by the same reference numerals, and the following explanation will be focused on the difference from Fig. 1.

In the load driving apparatus 20e of Fig. 9, a series connection of a load 3 and a first switching device 4 and a series connection of a dummy load 5 and a second switching device 6 are both connected between the both ends of the secondary side of a transformer 1a. That is to say, the series connection of the dummy load 5 and the second switching device 6 is connected in parallel to the series connection of the load 3 and the first switching device 4.

In the load driving apparatus 20e, since the connection line between the secondary side of the transformer 1a and the load 3 is partially shared with the connection line between the secondary side of the transformer 1a and the dummy load 5, configuration of the transformer 1a can be simplified.

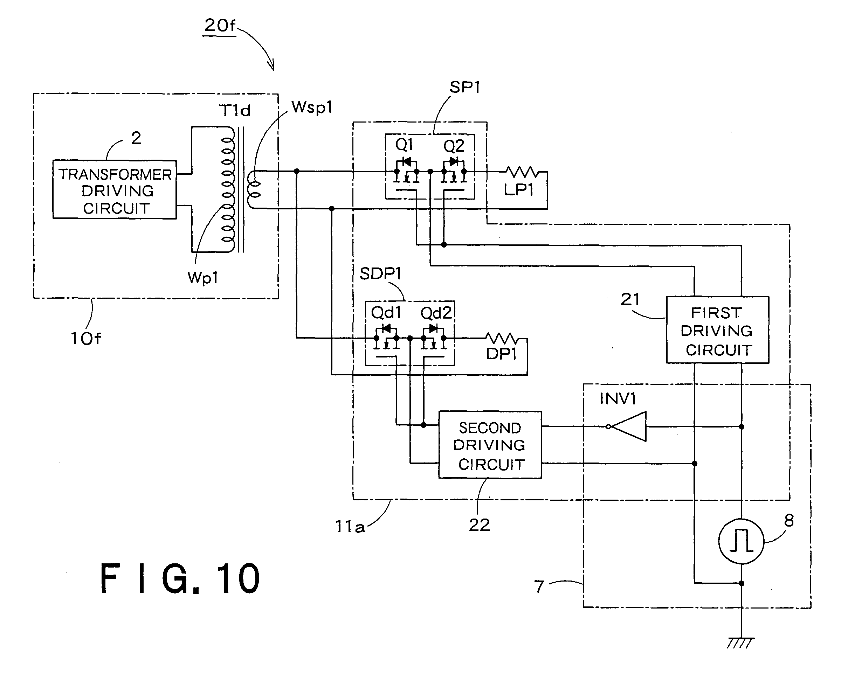

The fifth embodiment will be concretely described. Fig. 10 is a block diagram showing a concrete configuration of a switching power supply as a specific example of Fig. 9. In Fig.10, any component parts corresponding to those in Fig. 2 are denoted by the same reference numerals, and the following explanation will be focused on the difference from Fig. 2.

In the switching power supply of Fig. 10, no auxiliary winding is provided at the secondary side of a transformer 1d, a series connection of a first switch SP1 and a load LP1 and also a series connection of a second switch SDP1 and a dummy load DP1 are connected between the both ends of a secondary winding Wsp1 of the transformer T1d. That is to say, the series connection of the second switch SDP1 and the dummy load DP1 is connected in parallel to the series connection of the first switch SP1 and the load LP1.

The operation of the switching power supply of Fig. 10 will be described. A burst signal generating portion 8 outputs a pulse-shaped burst signal intermittently during the burst driving. When a high level burst signal is outputted, the operation of the switching power supply is the same as that of the switching power supply of Fig. 2, and a first driving circuit 21 turns on the first switch SP1. As a result, an alternate current flows through the load LP1 by an electromotive force generated between the both ends of the secondary winding Wsp1, and the load LP1 is driven. While the load LP1 is driven, the second SDP1 is turned off, and the dummy load DP1 is not driven.

On the other hand, while the burst signal generating portion 8 outputs a high level burst signal, a signal inverting circuit INV1 outputs a high level signal, and a second driving circuit 22 turns on the second switch SDP1. As a result, an alternate current flows through the dummy load DP1 by an electromotive force generated between the both ends of the secondary winding Wsp1, and the dummy load DP1 is driven. While the dummy load DP1 is driven, the first switch SP1 is turned off, and the load LP1 is not driven.

Thus, in the fifth embodiment, since not only the load LP1 and the first switch SP1 but also the dummy load DP1 and the second switch SDP1 are connected to the secondary winding Wsp1 of the transformer T1d, the auxiliary winding Wa1 shown in Fig. 2 is not required which results in reducing the size and also the cost of the transformer T1d. Without the auxiliary winding Wa1, it is possible to perform the lighting control of the discharge lamps in the same manner as the case where the auxiliary winding Wa1 of Fig. 2 is provided.

### (Sixth embodiment)

A sixth embodiment described below incorporates a discharge lamp as a load in the same manner as the third embodiment.

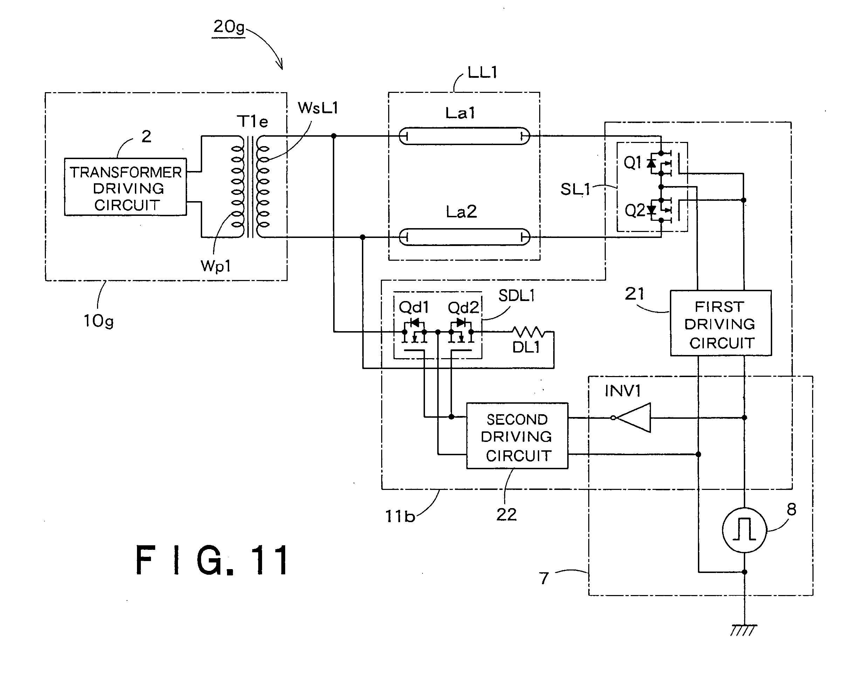

Fig. 11 is a block diagram showing a concrete configuration of a discharge lamp lighting apparatus 20g according to the sixth embodiment of the present invention. In Fig. 11, any component parts corresponding to those in Fig. 10 are denoted by the same reference numerals, and the following explanation will be focused on the difference from Fig. 10. In the discharge lamp lighting apparatus 20g, a first discharge lamp La1 is connected between one end of a secondary winding WsL1 of a transformer T1e and one terminal of a first switch SL1, and a second discharge lamp La2 is connected between the other end of the secondary winding WsL1 and the other terminal of the first switch SL1. A series connection of a dummy load DL1 and a second switch SDL1 is connected between the both ends of the secondary winding WsL1, in which the discharge lamp lighting apparatus 20g of Fig. 11 is common to the switching power supply of Fig. 10.

In the discharge lamp lighting apparatus 20g of Fig. 11, while a burst signal generating portion 8 outputs a burst signal, the first switch SL1 is turned on at the time of burst driving, and the first and second discharge lamps La1 and La2 are lit. During the burst driving, a current does not flow through the dummy load DL1.

On the other hand, while the burst signal generating portion 8 does not output a burst signal, the second switch SDL1 is turned on, and a current flows through the dummy load DL1, during which the first and second discharge lamps La1 and La2 are not lit.

When the discharge lamp lighting apparatus 20g of Fig. 11 performs stead driving, the burst signal generating portion 8 outputs a high level signal constantly thereby lighting the first and second discharge lamps La1 and La2 continuously.

Thus, the auxiliary winding Wa1 (Fig. 4) is not required at the secondary side of the transformer T1e also in the sixth embodiment, and the transformer T1e can be downsized. Even if the auxiliary winding Wa1 is omitted, it is possible to perform the lighting control of the first and second discharge lamps La1 and La2 in the same way as the case where the auxiliary winding Wa1 is provided (Fig. 4).

### (Seventh embodiment)

In a seventh embodiment described below, a plurality of discharge lamp units are connected to the secondary side of a transformer.

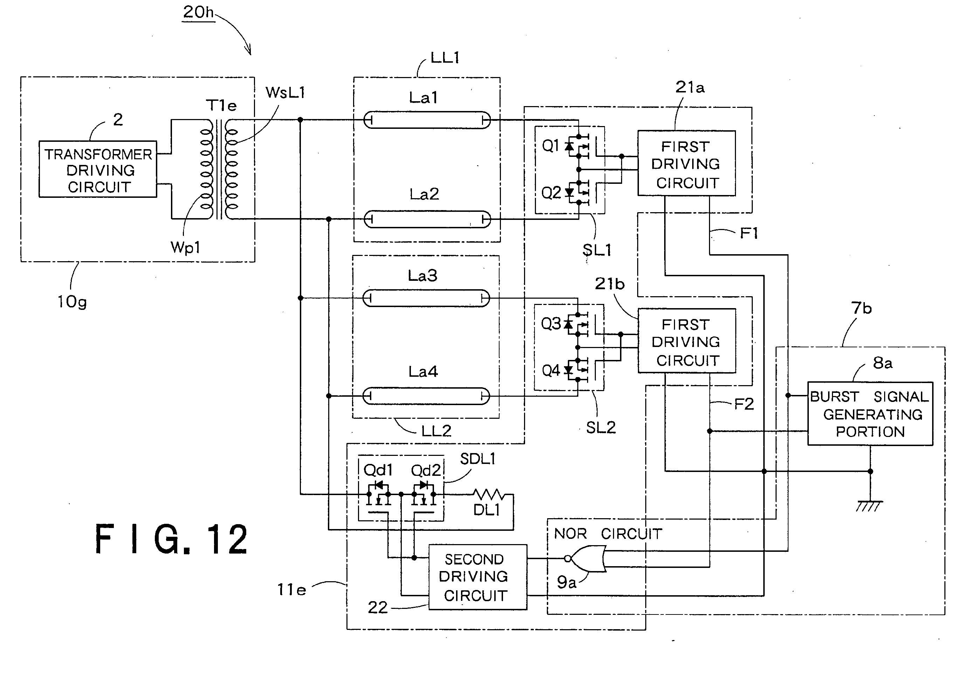

Fig. 12 is a block diagram showing a concrete configuration of a discharge lamp lighting apparatus 20h according to the seventh embodiment of the present invention. In Fig. 12, any component parts corresponding to those in Fig. 11 are denoted by the same reference numerals, and the following explanation will be focused on the difference from Fig. 11. In the discharge lamp lighting apparatus 20h of Fig. 12, a series circuit of a first discharge lamp La1, a first switch SL1 and a second discharge lamp La2, and a series circuit of a first discharge lamp La3, a first switch SL2 and a second discharge lamp La4 are connected in parallel to each other between the both ends of a secondary winding WsL1 of a transformer T1e, and first driving circuits 21a and 221b are connected respectively to the first switches SL1 and SL2.

A series circuit of a dummy load DL1 and a second switch SDL1 is also connected between the both ends of the secondary winding WsL1. Thus, three series circuits are connected in parallel to one another between the both ends of the secondary winding WsL1.

In the discharge lamp lighting apparatus 20h of Fig. 12, at the time of burst driving, when a burst signal generating portion 8a outputs a high level burst signal for the first driving circuit 21a, the first and second discharge lamps La1 and La2 corresponding to the first driving circuit 21a are lit. During this period, the other discharge lamps are not lit and a current does not flow through the dummy load DL1. Also, when the burst signal generating portion 8a outputs a high level burst signal for the first driving circuit 221b at a different timing, the discharge lamps La3 and La4 corresponding to the first driving circuit 21b are lit. During this period, the other discharge lamps are not lit and a current does not flow through the dummy load DL1. At the other timing, a signal inverting circuit 9a outputs high level signal, and a current flows through the dummy load DL1, during which no discharge lamps are driven.

Thus, in the seventh embodiment, the number of discharge lamps to be driven during the burst driving is increased compared with the six embodiment, and the time of driving the dummy load DL1 can be reduced thereby reducing the power consumption for the dummy load DL1. Also, since the auxiliary winding Wa1 (Fig. 5) is not required at the secondary side of the transformer T1e, the transformer T1e can be downsized. Without the auxiliary winding Wa1, it is possible to perform the lighting control of the discharge lamps in the same manner as the case where the auxiliary winding Wa1 is provided (Fig. 5).

### (Other embodiments)

While the present invention has been explained with reference to exemplary embodiments, the present invention is not limited to the configurations of the embodiments, and various modifications are possible without departing from the spirit and scope of the present invention.

For example, in the first to fifth embodiments described above, the apparatus may be partly or totally composed of discrete components or integrated on a semiconductor substrate.

In Fig. 7, three units of first and second discharge lamps La1 and La2, La3 and La4, and La5 and La6, three of first switch SL1, SL2 and SL3, and three of first driving circuits 21a, 21b and 221c are provided, but four units or more of first and second discharge lamps may be connected. In the same way, in Fig. 12, two units of first and scone discharge lamps La1 and La2, and La3 and La4, two of first switches SL1 and SL2, and two of first driving circuits 21a and 21b are provided, but three or more thereof may be connected. Also, discharge lamps may be connected only to one end of the secondary winding WsL1 instead of to the both ends of the secondary winding WsL1.

In the first to fifth embodiments described above, the first and second driving circuits 21 and 22 are provided to turn on and off the first and second switches, whereby the MOSFETs in the first and second switches can be driven rapidly in the saturation region. In this connection, the first and second drives 21 and 22 are not necessarily required and may be omitted in some cases.

In the explanation of the embodiments described above, the first and second switches are constituted by an n-MOSFET, but may be constituted by a p-MOSFET, or a bipolar transistor, a bi-CMOS, or other switching elements (for example, a thyristor, a diode, a triac, a diac). Alternatively, the first and second switches SP1 and SPD1 may be constituted by an optical switch (such as a photo-MOS relay, a phototriac, a photodiode, a photocoupler, a phototransistor, a photoconductive cell, and the like), or a mechanical relay, or a combination thereof.

Further, the kind, connection mode or number of the load LL1 is not limited to the configurations set forth in the embodiments described above, but various configurations are possible. For example, the discharge lamp may be a non-straight tube.

## Claims

1. A load driving apparatus **characterized by** including:
a transformer;
a transformer driving circuit for supplying an alternate current signal to a primary side of the transformer;
a load connected at a secondary side of the transformer;
a dummy load connected at the secondary side of the transformer;
a first switching device for switching whether to supply a secondary side signal of the transformer to the load;
a second switching device for switching whether to supply the secondary side signal to the dummy load; and
a switching control portion for controlling the first and second switching devices such that the supply of the secondary side signal to the dummy load is stopped when the secondary side signal is supplied to the load, and that the supply of the secondary side signal to the load is stopped when the secondary side signal is supplied to the dummy load.

2. A load driving apparatus according to claim 1, wherein the switching control portion controls the first and second switching devices such that during steady driving, the secondary side signal is always supplied to the load and the supply of the secondary side signal to the dummy load is stopped, and such that during burst driving, the secondary side signal is supplied alternately to the load and the dummy load.

3. A load driving apparatus according to claim 2, wherein a plurality of loads are provided, and wherein the switching control portion controls the first and second switching devices so that the plurality of loads are driven in turn in a time-shifted manner during the burst driving, the dummy load is stopped from being driven while any one of the plurality of loads is driven and the dummy load is driven while none of the plurality of loads is driven.

4. A load driving apparatus according to any one of claims 1 to 3, wherein the transformer includes:
a primary winding;
a secondary winding which is magnetically coupled to the primary winding and to which the load is connected; and
an auxiliary winding which is disposed at the secondary side of the transformer and to which the dummy load is connected.

5. A load driving apparatus according to claim 4, further comprising:
a first closed circuit including the secondary winding, the load and the first switching device; and
a second closed circuit including the auxiliary winding, the dummy load and the second switching device.

6. A load driving apparatus according to any one of claims 1 to 3, wherein the transformer includes:
a primary winding; and
a secondary winding which is magnetically coupled to the primary winding and to which the load and the dummy load are connected.

7. A load driving apparatus according to claim 6, further comprising:
a first closed circuit including the secondary winding, the load and the first switching device; and
a second closed circuit including the secondary winding, the dummy load and the second switching device.

8. A load driving apparatus according to any one of claims 4 to 7, wherein the loads are connected separately to one end and the other end of the secondary winding.

9. A load driving apparatus according to claim 4 or 5, wherein a plurality of secondary windings are provided, the loads and the first switching devices are connected separately to the plurality of secondary windings, and wherein the switching control portion controls the first and second switching devices so that the plurality of loads are driven in turn in a time-shifted manner during the burst driving, the dummy load is stopped from being driven while any one of the plurality of loads is driven and the dummy load is driven while none of the plurality of loads is driven.

10. A load driving apparatus according to any one of claims 1 to 9, wherein the load is a discharge lamp, and wherein the switching control portion performs lighting control the discharge lamp.

11. A load driving apparatus according to any one of claims 1 to 9, wherein the load is one of an electronic device and an electronic component, and wherein the switching control portion performs power supply control of a switching power supply.
